# EUROPEAN PATENT SPECIFICATION

(11) **EP 1 907 494 B1**
(45) Date of publication and mention of the grant of the patent: **24.10.2012**
(21) Application number: 06743875.4
(22) Date of filing: 03.05.2006
(51) Int. Cl.: C09D 4/00

(54) **ORGANIC-INORGANIC HYBRID COATINGS**
ORGANISCH-ANORGANISCHE HYBRIDBESCHICHTUNGEN
REVETEMENTS HYBRIDES ORGANIQUES-INORGANIQUES

(30) Priority: 11.05.2005 GB 0509553
(43) Date of publication of application: 09.04.2008
(73) Proprietor: Sheffield Hallam University, Sheffield S1 1WB (GB)
(72) Inventor: WANG, Heming, Materials Engineering Research Inst., Howard St., Sheffield S1 1WB (GB); AKID, Robert, Materials Engineering Research Inst., Howard St., Sheffield S1 1WB (GB)
(74) Representative: Neilson, Martin Mark
(86) International application number: PCT/GB2006/001627
(87) International publication number: WO 2006/120390

(56) References cited:
- EP-A- 1 310 535
- EP-A2- 0 358 011
- EP-A2- 0 985 718
- US-A1- 2003 109 613

## Description

### Field of the Invention

The present invention relates to coatings formed on substrates and in particular to coating formed by organically modified silicates.

### Background to the Invention

Corrosion protection of metals, in particular aluminum alloys, is an important commercial and industrial field due to the extensive use of corrosion susceptible materials in construction, marine, automotive and aviation applications. Material corrosion is a significant problem as it significantly reduces structural integrity resulting in costly repair or if undetected for a significant length of time, irreparable damage and even loss of life.

One early and extensively used anticorrosion coating comprised chromate which whilst effective is highly toxic, carcinogenic and environmentally unfriendly. There was therefore a need for a more environmentally benign substrate treatment method.

A number of anticorrosion treatments have been proposed to address the above problems. One particular class of coatings known as organically modified silicates, commonly referred to as 'ormosils', have found use in various high performance applications due to their good corrosion protection for various metal substrates.

Ormosils are hybrid organic-inorganic materials resulting from the hydrolysis and condensation of organically modified silicates with conventional alkoxide pre-cursors. When formed as a coating, the organic component in the matrix offers the advantage of mechanical toughness and flexibility whilst the inorganic component provides the coating with its hardness and thermal stability.

US 2003/0012971 discloses an ormosil composite coating comprising a plurality of inorganic particles of a size greater than one micron entrapped within the ormosil structure. Inorganic particles are selected from oxides, nitrides, carbides and carbonitrides so as to provide ormosil films exhibiting enhanced abrasion and corrosion resistance.

EP 0358011 discloses a scratch resistant varnish coating for a substrate formed from an organofunctional silane, an aluminum based compound and optionally a condensation catalyst to promote hardening of the coating.

EP 1310535 discloses a corrosion protection coating for a substrate produced by hydrolytic condensation. The coating precursors include a cross linkable silane and an aluminum alkoxide. Optionally, cross linkable prepolymers or reactive solvents may be incorporated to affect the physical and mechanical properties or the resultant coating. Hydrolysis of the sols may be catalyzed by a condensation catalyst such as an aminoalkane.

The corrosion resistance behavior of ormosil thin films on aluminum substrates was investigated in Progress in Organic Coatings 44 (2002) 185-199*;* and Progress in Organic Coatings 50 (2004) 231-246. To prepare the coatings, at least one curing agent is added to the ormosil sol with the resulting sol mixture being allowed to stand for a short period of time prior to film deposition. The solutions are applied to a cleaned aluminum substrate via spray coating techniques.

One disadvantage with known ormosil films and associated substrate processing techniques is the required curing time. Typically, a conventional ormosil coating of approximately 6 to 16 micron thickness requires at least 24 hours to dry. Where thicker anticorrosion coatings are required, this drying time is significantly increased. The disadvantageous long drying time associated with known ormosil coatings increases the cost of treating the substrate in addition to lengthening manufacturing processes.

An additional disadvantage with conventional substrate treatment techniques involving ormosil films is the need to apply the prepared ormosil sol immediately or shortly after sol preparation. Following addition of the curing agent to the ormosil sol a curing process will begin and the sol will gradually solidify with the effect that the prepared sol cannot be stored for long periods prior to use. This introduces inconvenience to the manufacturer, as fresh solutions are required to be prepared immediately prior to substrate treatment.

### Summary of the Invention

The inventors provide a method of coating a substrate in which the final curing time is significantly less than that of known techniques. Typically curing times of the organically modified silicate (ormosil) coatings according to the present invention may be of the order of minutes and not hours as with prior art processing techniques.

By preparing a liquid mixture comprising the curing agent being physically separate from a sol comprising the ormosil, a number of significant advantages are realised. Both solutions may be stored independently for long periods, of the order of months, prior to deposition on the substrate. Moreover, the inventors have found that by applying the curing agent mixture directly onto the substrate followed by deposition of the ormosil sol onto the curing agent layer, the drying time of the coating at ambient temperature may be of the order of minutes.

According to specific implementations of the present invention, it is beneficial to incorporate dopant materials into the curing agent solution, for example granular particulates and/or nanoparticles, for example, to alter the chemical or mechanical properties of the coating. Additionally, it is possible to prepare dense thick coatings by including certain types of particulates within the curing agent solution. By preparing the coating via a two step process involving preparation of the separate curing agent mixture and the ormosil or ormosil hybrid sol, it is possible to optimise stabilisation of the dopant material or dopant particulates within the curing agent sol without the stabilisation being effected by interaction between the ormosil and the stabilising agent.

Preferably, an organic polymer is used as stabilising agent, in particular polyvinylalcohol and/or triethylenetriamine.

According to a first aspect of the present invention there is provided a method of coating a substrate, said method comprising: applying a liquid mixture containing a curing agent and being devoid of an organically modified silicate to a substrate to form a coating; allowing the liquid mixture to dry or partially dry; applying a sol to the coating, the sol comprising an organically modified silicate and being devoid of the curing agent; and allowing the curing agent to cure the organically modified silicate to form a solid coating.

Preferably, the curing agent comprises any one or a combination of the following set of triethylenetriamine (TETA); diethylenetriamine (DEA); tetraethylenepentamine (TEPA).

Preferably, the organically modified silicate comprises any one or a combination of the following: tetramethoxysilane (TMOS); tetraethoxysilane (TEOS); 3-glycidoxypropylmethoxysilane (GLYMO).

The coating of the present invention may be applied directly or indirectly onto any type of substrate material being in particular a metal, aluminium, aluminium alloy, in particular aluminium 2024-T3, glass, ceramic, stainless steel carbon, steel, galvanised steel or electroplated steel.

Other materials or chemicals that may be added to the curing agent mixture may be configured to bind with the curing agent either by physical binding or chemical binding. The dopant material may comprise any desired material configured to alter the chemical and/or mechanical properties of the coating. The dopant material may comprise any one or a combination of the following: nanoparticles, γ-alumina, at least one biologically active molecule, at least one bacteria, at least one dopant metal ion, at least one dye compound, silicon carbide, metal carbide or alumina gel particulates.

Preferably, the curing agent mixture and the organically modified silicate sol are dried at room temperature, the drying time typically taking one to two minutes or preferably less than one minute.

The drying time of the coating formed by deposition of the curing agent mixture and organically modified silicate sol, at ambient temperature, may be less than one hour, less than thirty minutes, less than five minutes or preferably less than one minute, depending upon the thickness and composition of the organically modified silicate coating.

In order to achieve a substrate coating of required thickness, corrosion resistance and hardness the silanes, alkyl-silanes or alkyl-modified silanes of the present invention may be mixed with other organic, inorganic or hybrid polymers to obtain the desired organically modified silicate sol.

Metal atom or ion nanoparticles may be added to the curing agent solution prior to coating deposition. In particular zirconium may be added to the curing agent solution to affect the optical properties of the coating whereby the coating of the present invention may be configured as an anti-reflection coating.

### Brief Description of the Drawings

For a better understanding of the invention and to show how the same may be carried into effect, there will now be described by way of example only, specific embodiments, methods and processes according to the present invention with reference to the accompanying drawings in which:

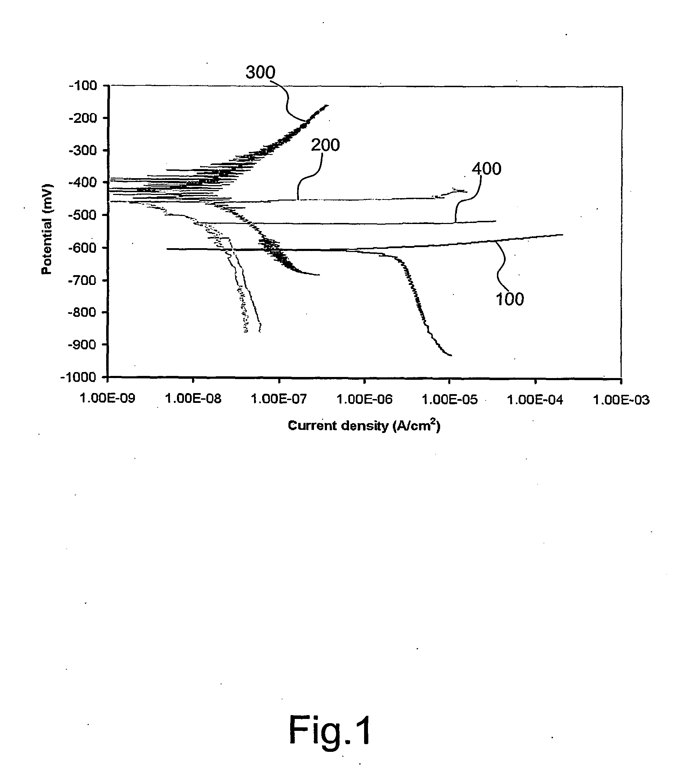

Fig 1 is a graph of potentiodynamic polarisation curves for a bare aluminum alloy substrate, a conventional chromic acid anodised coating, a hybrid sol-gel coating of the present invention cured at room temperature and a hybrid sol-gel

### Detailed Description

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

The anticorrosion behaviour of organic-inorganic hybrid coatings cured at room temperature and 150°C has been studied using DC electrochemical and chemical exfoliation tests. It has been found that the surface treatment and hence the condition of the substrate, is an important factor to ensure good corrosion resistance. Removal of the substrate oxide layer prior to coating either by polishing or using a dilute acid etch gives rise to excellent corrosion resistance through improved substrate-coat bonding. The hardness of the hybrid coatings can be increased by doping the sol- gel with particulates.

### Ormosil Preparation - Example 1

### Preparation of the Curing Agent Solution

The curing agent of 2 ml diethylenetriamine(DEA) was dissolved in an organic solvent of 80 ml 2-propanol and 20 ml methanol under vigorous stirring.

### Preparation of the Ormosil Sol

10 ml 3-Glycidoxypropylmethoxysilane (GLYMO) and 10 ml tetraethoxysilane (TEOS) and 30 ml ethanol alcohol were mixed first, then 1 ml 10% HNO₃ water solution was added into the mixed solution to adjust the pH value. Finally, 10 ml water was added dropwise into the solution. The sol was allowed to age for 24 hours.

### Substrate Surface Preparation and Coating Methods

Coupons of commercially wrought aluminium alloy 2024-T3 (AA) with a size of 2cm x 3cm were polished to a one micron surface finish and then ultrasonically cleaned in deionised water and methanol. The substrates were coated with the hybrid coating using a dip technique and dried at room temperature. The coatings were touch-dry after one hour. These samples were then used to conduct electrochemical polarisation curves and chemical exfoliation tests. They are listed in table 1 as the G0 group. A further five groups of coatings were applied to AA coupons of size 2.5cm x 5cm. Details of the preparation of these samples are given in Table 1. Sol-gel composite organic-inorganic hybrid coatings with particulate additions were also prepared and cured at 150°C for one hour (sample G4).

**Table 1. Details of sample preparation and coating procedure**

| | |
|---|---|
| G0 | Polished to a one micron surface finish and then ultrasonically cleaned in deionised water and methanol. |
| G1 | Cleaned in soapy water, rinsed in deionised water and methanol. Sol-gel dip-coat and cured at room-temperature for 3 hrs. |
| G2 | Polished to remove the oxide layer using carbimet paper^{®} with 400 grit. Ultrasonic clean in deionised water and methanol. Sol-gel dip-coat and cured at room-temperature for 3 hrs. |
| G3 | Cleaned in soapy water, rinsed in deionised water and methanol. Ultrasonic treatment in acid solution to remove oxide layer. Deionised-water-clean; and Sol-gel dip-coat and cured at room-temperature for 3 hrs. |
| G4 | Cleaned in soapy water, rinsed in deionised water and methanol. Ultrasonic treatment in acid solution to remove oxide layer. Deionised-water-clean; and Sol-gel+particulates dip-coat and cured at 150°C for 1 hr. |
| G5 | Cleaned in soapy water, rinsed in deionised water and methanol. Ultrasonic treatment in acid solution to remove oxide layer. Deionised-water-clean; Sol-gel dip-coat using modified hybrid coating then cured at room-temperature for 24 hrs. |

Samples G0, G1, G3 and G5 are substantially pure epoxy-silica coatings (silica and silica-epoxy). Sample G4 is also an epoxy-silica coating with the addition of silica gel particulates. Samples G0 to G5 differ from one another in the treatment of the original substrate material as detailed in table 1.

DC-polarisation tests of the coated AA substrates were performed using a conventional three-electrode electrochemical cell with a Saturated Calomel reference electrode (SCE) and Pt counter electrode. All measurements were conducted within aqueous, air-exposed, sodium chloride (3.5%) solution. The test area consisted of a 10 mm diameter circle. For comparison purposes equivalent data was obtained for the un-coated (bare) substrate. Exfoliation tests were performed by immersing both bare and coated samples in an air-exposed solution of 4M NaCl, 0.5M KNO₃ and 0.1M HNO₃ for 168 hours. Accelerated long term corrosion resistance was evaluated using the following cyclic method:

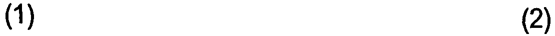

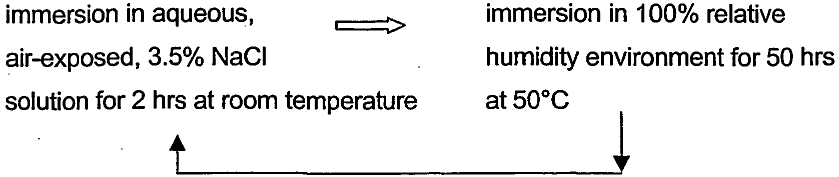

A photographic record of the changes in surface condition was made over the duration of the test. The morphology of the coating and cross sections before and after corrosion testing was also studied using scanning electron microscopy (Philips XL40 or Joel 840A SEM). Thin sputtered carbon films were applied to some coatings in order to prevent surface charging in the standard SEM. Vickers hardness tests were carried out using a Mitutoyo MVK-H hardness tester using a 25 g load.

### Hardness and Film Thickness Measurements

A Vickers hardness value of 145 kg/mm² was recorded for the polished bare Al 2024-T3 substrate while the room temperature cured hybrid film (sample G0) has a hardness of 51 kg/mm². The hybrid coating cured at 150°C for one hour was found to have a hardness 122 kg/mm². On addition of particulates to the coating (sample G4) the hardness was found to increase to 250 kg/mm². Thus, loading the coating with particulates has greatly increased the hardness of the coating by 60% above that of the bare substrate.

Film thicknesses were generally found to be in the range of 1-10 µm, which was dependent on the concentration of the hybrid sol. The average thickness of the films was found to be around 6 µm. The films obtained were very dense and uniform.

### Corrosion Resistance of the Coatings

Figure 1 herein is a graph of Potentiodynamic polarisation curves recorded in aqueous 3.5% NaCl solution at 25°C for a bare polished room-temperature cured (AA) samples (curve 100); conventional chromic acid anodised coating (curve bare AA corroded rapidly on the application of small anodic potentials. As a comparison, curve (200) presents the AA substrate after chromic acid anodising. As can be seen this surface is less active having an I_{corr} of around 3 nA/cm² and E_{corr}= -460 mV. Curve (300) presents the results for the hybrid coat system on polished AA. This exhibits a significant improvement in corrosion resistance, when compared to the untreated Al alloy, with values of I_{cor}r= 10 nA/cm² and E_{corr}= -420 mV. Curve 400 presents the hybrid sol-gel coat cured at 150°C with silica gel particulates. It shows an improvement in anticorrosion, when compared to the bare AA having an I_{corr} of about 10 nA/cm² and E_{corr}= -520 mV.

### Accelerated Long Term Corrosion Resistance Testing

Accelerated long term corrosion resistance was evaluated using the above cyclic corrosion method using organically modified silicate coated samples according to the present invention after a single corrosion test cycle.

After a single corrosion test cycle, it was observed that the anticorrosion coating of G1 group coated samples exhibited cracking. The reason for this may be attributed to the weak binding between the film and the bare AA. That is, the substrate was simply cleaned in soapy water and washed in deionised water, thereby leaving a loose oxide layer on the surface.

The samples prepared using the G2 procedure resulted in a film that exhibited good anticorrosion properties with little or no deterioration in the coating up to two test cycles (total: 4 hrs in 3.5% NaCl solution and 100 hrs in 50°C hot water humid environment). After three test cycles, some parts of the sample started to show signs of corrosion which further increased after 4 test cycles.

The G3 procedure produced samples that displayed similar behaviour to the G2 samples although it was noted that after 2 test cycles the G2 coating showed improved corrosion resistance over that of the G3 coating. Compared with G1 group samples, no cracking was found on the G2 and G3 samples. The reason for this is thought to be due to the removal of the substrate oxide film by either polishing or by the weak acid etch. Samples prepared via the G4 route exhibited good corrosion resistance after 2 tests cycles although after 3 test cycles the sample began to show signs of corrosion. The G5 procedure produced samples having the best corrosion resistance; only after five test cycles were signs of corrosion observed on the samples (total: 10 hrs in 3.5% NaCl solution and 250 hrs in 50°C hot water humid environment).

### Exfoliation Tests

Coating sample G0 was examined before and after immersion in the exfoliation solution for 168 hours.

Substrates with a sol-gel coating were protected from corrosion showing no signs of spallation. The coating exhibited excellent anticorrosion properties providing an adherent protection film on the AA substrate. This result could be considered to be attributed to the surface finish polish, which improved the bonding between the film and the substrate.

### SEM Analysis

The surface morphology of the bare AA substrate, chromic acid anodised (CAA) and hybrid coating (sample G0), were investigated following testing in the exfoliation solution.

Severe corrosion after 72 hrs immersion, was observed for the untreated substrate. Here a thick corrosion product was formed (oxide film formation) during immersion which, on drying, exhibited numerous cracks. Cracking and spalling of this film allows further oxidation of the substrate resulting in high corrosion rates. Inspection of the CAA surface after 72 hrs immersion revealed good adhesion and that the surface was more resistant to corrosion.

However detailed examination of the surface of the untreated substrate identified the presence of numerous surface micro-pits. The thickness of the CAA coat was very thin (about one micron) and the occurrence of micro-pitting may be attributed to the presence of intermetallics within the microstructure of the AA material. By comparison the room temperature-cured organically modified silicate Inspection of the CAA surface after 72 hrs immersion revealed good adhesion and that the surface was more resistant to corrosion.

However detailed examination of the surface of the untreated substrate identified the presence of numerous surface micro-pits. The thickness of the CAA coat was very thin (about one micron) and the occurrence of micro-pitting may be attributed to the presence of intermetallics within the microstructure of the AA material. By comparison the room temperature-cured organic-inorganic hybrid coat demonstrated excellent corrosion resistance and maintained adhesion even after 168 hrs in the exfoliation solution. Only at high magnification could any signs of damage (cracking) be observed. However such cracks were less than a micron in size and were not considered to be detrimental to the corrosion resistance of the coating.

## Claims

1. A method of coating a substrate, said method comprising:
applying a liquid mixture containing a curing agent and being devoid of an organically modified silicate to a substrate to form a coating;
allowing the liquid mixture to dry or partially dry;
applying a sol to the coating, the sol comprising an organically modified silicate and being devoid of the curing agent; and
allowing the curing agent to cure the ormosil or ormosil hybrid to form a solid coating.

2. The method as claimed in claim 1 wherein said liquid mixture is dried at room temperature.

3. The method as claimed in claim 14 or 15 further comprising:
drying said sol at room temperature.

4. The method as claimed in any preceding claim wherein said curing agent comprises any one or a combination of the following set of:
triethylenetriamine (TETA);
diethylenetriamine (DEA);
tetraethylenepentamine (TEPA).

5. The method as claimed in any preceding claims wherein said organically modified silicate comprises any one or a combination of the following set of:
tetramethoxysilane (TMOS);
tetraethoxysilane (TEOS);
3-glycidoxypropylmethoxysilane (GLYMO).

6. The method as claimed in any preceding claim wherein said substrate comprises any one of the following set of:
• a metal;
• aluminium;
• an aluminium alloy;
• a glass;
• a ceramic;
• stainless steel.

7. The method as claimed in any preceding claim wherein the liquid mixture comprises an organic and/or inorganic dopant material dispersed within the liquid mixture, the dopant material configured to alter the chemical and/or mechanical properties of the coating.

8. The method as claimed in claim 7 wherein the dopant material is γ-alumina.

9. The method as claimed in claim 7 wherein said dopant material is at least one biologically active molecule.

10. The method as claimed in claim in claim 7 wherein the dopant material is at least one species of bacteria.

11. The method as claimed in claim 7 wherein said dopant material is at least one dopant metal or metal ion.

12. The method as claimed in claim 7 where the dopant material is at least one dye compound.

13. The method as claimed in claim 7 wherein the dopant material is silicon carbide or a metal carbide.

14. The method as claimed in claim 7 wherein the dopant material comprises alumina gel particulates.

15. The method as claimed in any preceding claim further comprising mixing the sol with at least one dopant silane compound prior to said step of applying said sol to said coating.

16. The method as claimed in any preceding claim wherein a drying time of the coating formed by said liquid mixture and said sol, at ambient temperature, is less than one hour.

17. The method as claimed in any preceding claim wherein a drying time of the coating formed by said liquid mixture and said sol, at ambient temperature, is less than thirty minutes.

18. The method as claimed in any preceding claim wherein a drying time of the coating formed by said liquid mixture and said sol, at ambient temperature, is less than five minutes.

19. The method as claimed in any preceding claim wherein a drying time of the coating formed by said liquid mixture and said sol, at ambient temperature, is less than one minute.

## Patentansprüche

1. Verfahren zur Beschichtung eines Substrates, wobei das Verfahren umfasst:
Auftragen eines flüssigen Gemisches, das ein Härtungsmittel enthält und frei von einem organisch modifizierten Silikat ist, auf ein Substrat und der Bildung von einer Beschichtung;
Trocknenlassen oder teilweises Trocknenlassen des flüssigen Gemisches;
Auftragen eines Sols auf die Beschichtung, wobei das Sol ein organisch modifiziertes Silikat umfasst und frei von dem Härtungsmittel ist, und
Zulassen, dass das Härtungsmittel das Ormosil oder Ormosilhybrid härtet, um eine feste Beschichtung zu bilden.

2. Verfahren, wie es in Anspruch 1 beansprucht ist, wobei das flüssige Gemisch bei Raumtemperatur getrocknet wird.

3. Verfahren, wie es in Anspruch 14 oder 15 beansprucht ist, das außerdem umfasst:
Trocknen des Sols bei Raumtemperatur.

4. Verfahren, wie es in einem vorangehenden Anspruch beansprucht ist, wobei das Härtungsmittel eines oder eine Kombination aus der folgenden Gruppe umfasst:
Triethylentriamin (TETA);
Diethylentriamin (DEA);
Tetraethylenpentamin (TEPA).

5. Verfahren, wie es in einem vorangehenden Anspruch beansprucht ist, wobei das organisch modifizierte Silikat eines oder eine Kombination aus der folgenden Gruppe umfasst:
Tetramethoxysilan (TMOS);
Tetraethoxysilan (TEOS);
3-Glycidoxypropylmethoxysilan (GLYMO).

6. Verfahren, wie es in einem vorangehenden Anspruch beansprucht ist, wobei das Substrat ein beliebiges aus der folgenden Gruppe umfasst:
• ein Metall;
• Aluminium;
• eine Aluminiumlegierung;
• ein Glas;
• eine Keramik;
• Edelstahl.

7. Verfahren, wie es in einem vorangehenden Anspruch beansprucht ist, wobei das flüssige Gemisch ein organisches und/oder anorganisches Dotiermaterial, das in dem flüssigen Gemisch dispergiert ist, umfasst, wobei das Dotiermaterial so aufgebaut ist, dass es die chemischen und/oder mechanischen Eigenschaften der Beschichtung verändert.

8. Verfahren, wie es in Anspruch 7 beansprucht ist, wobei das Dotiermaterial γ-Aluminiumoxid ist.

9. Verfahren, wie es in Anspruch 7 beansprucht ist, wobei das Dotiermaterial wenigstens ein biologisch aktives Molekül ist.

10. Verfahren, wie es in Anspruch 7 beansprucht ist, wobei das Dotiermaterial wenigstens eine Bakterienspezies ist.

11. Verfahren, wie es in Anspruch 7 beansprucht ist, wobei das Dotiermaterial wenigstens ein Dotiermetall oder -metallion ist.

12. Verfahren, wie es in Anspruch 7 beansprucht ist, wobei das Dotiermaterial wenigstens eine Farbstoffverbindung ist.

13. Verfahren, wie es in Anspruch 7 beansprucht ist, wobei das Dotiermaterial Siliciumcarbid oder Metallcarbid ist.

14. Verfahren, wie es in Anspruch 7 beansprucht ist, wobei das Dotiermaterial Aluminiumoxidgel-Partikel umfasst.

15. Verfahren, wie es in einem vorangehenden Anspruch beansprucht ist, das außerdem Mischen des Sols mit wenigstens einer Silan-Dotierverbindung vor dem Schritt des Auftragens des Sols auf die Beschichtung umfasst.

16. Verfahren, wie es in einem vorangehenden Anspruch beansprucht ist, wobei eine Trocknungszeit der Beschichtung, die durch das flüssige Gemisch und das Sol gebildet wird, bei Umgebungstemperatur weniger als eine Stunde beträgt.

17. Verfahren, wie es einem vorangehenden Anspruch beansprucht ist, wobei eine Trocknungszeit der Beschichtung, die durch das flüssige Gemisch und das Sol gebildet wird, bei Umgebungstemperatur weniger als 30 Minuten beträgt.

18. Verfahren, wie es in einem vorangehenden Anspruch beansprucht ist, wobei die Trocknungszeit der Beschichtung, die durch das flüssige Gemisch und das Sol gebildet wird, bei Umgebungstemperatur weniger als 5 Minuten beträgt.

19. Verfahren, wie es in einem vorangehenden Anspruch beansprucht ist, wobei die Trocknungszeit der Beschichtung, die durch das flüssige Gemisch und das Sol gebildet wird, bei Umgebungstemperatur weniger als eine Minute beträgt.

## Revendications

1. Procédé de revêtement d'un substrat, ledit procédé comprenant :
l'application d'un mélange liquide contenant un durcisseur et étant dépourvu d'un silicate organiquement modifié à un substrat pour former un revêtement ;
le fait de laisser le mélange liquide sécher ou partiellement sécher ;
l'application d'un sol au revêtement, le sol comprenant un silicate organiquement modifié et étant dépourvu du durcisseur ; et
le fait de laisser le durcisseur durcir l'ormosil ou l'hybride d'ormosil pour former un revêtement solide.

2. Procédé selon la revendication 1, dans lequel ledit mélange liquide est séché à température ambiante.

3. Procédé selon la revendication 1 ou 2 comprenant :
le séchage dudit sol à température ambiante.

4. Procédé selon l'une quelconque des revendications précédentes, dans lequel ledit durcisseur comprend l'un quelconque ou une combinaison des éléments suivants :
la triéthylènetriamine (TETA) ;
la diéthylènetriamine (DEA) ;
la tétraéthylènepentamine (TEPA).

5. Procédé selon l'une quelconque des revendications précédentes, dans lequel ledit silicate organiquement modifié comprend l'un quelconque ou une combinaison des éléments suivants :
le tétraméthoxysilane (TMOS) ;
le tétraéthoxysilane (TEOS) ;
le 3-glycidoxypropylméthoxysilane (GLYMO).

6. Procédé selon l'une quelconque des revendications précédentes, dans lequel ledit substrat comprend l'un quelconque des éléments suivants :
• un métal ;
• un aluminium ;
• un alliage d'aluminium ;
• un verre ;
• une céramique ;
• un acier inoxydable.

7. Procédé selon l'une quelconque des revendications précédentes, dans lequel le mélange liquide comprend un matériau dopant organique et/ou inorganique dispersé à l'intérieur du mélange liquide, le matériau dopant étant configuré pour modifier les propriétés chimiques et/ou mécaniques du revêtement.

8. Procédé selon la revendication 7, dans lequel le matériau dopant est une γ-alumine.

9. Procédé selon la revendication 7, dans lequel le matériau dopant est au moins une molécule biologiquement active.

10. Procédé selon la revendication 7, dans lequel le matériau dopant est au moins une espèce de bactérie.

11. Procédé selon la revendication 7, dans lequel ledit matériau dopant est au moins un métal ou un ion métallique dopant.

12. Procédé selon la revendication 7, dans lequel le matériau dopant est au moins un composé colorant.

13. Procédé selon la revendication 7, dans lequel le matériau dopant est le carbure de silicium ou un carbure métallique.

14. Procédé selon la revendication 7, dans lequel le matériau dopant comprend des particules de gel d'alumine.

15. Procédé selon l'une quelconque des revendications précédentes, comprenant en outre le mélange du sol avec au moins un composé silane dopant avant ladite étape d'application dudit sol audit revêtement.

16. Procédé selon l'une quelconque des revendications précédentes, dans lequel un temps de séchage du revêtement formé par ledit mélange liquide et ledit sol, à température ambiante, est inférieur à une heure.

17. Procédé selon l'une quelconque des revendications précédentes, dans lequel un temps de séchage du revêtement formé par ledit mélange liquide et ledit sol, à température ambiante, est inférieur à trente minutes.

18. Procédé selon l'une quelconque des revendications précédentes, dans lequel un temps de séchage du revêtement formé par ledit mélange liquide et ledit sol, à température ambiante, est inférieur à cinq minutes.

19. Procédé selon l'une quelconque des revendications précédentes, dans lequel un temps de séchage du revêtement formé par ledit mélange liquide et ledit sol, à température ambiante, est inférieur à une minute.
